# EUROPÄISCHE PATENTSCHRIFT

(11) **EP 0 624 079 B1**
(45) Veröffentlichungstag und Bekanntmachung des Hinweises auf die Patenterteilung: **23.07.1997**
(21) Anmeldenummer: 93924550.2
(22) Anmeldetag: 29.10.1993
(51) Int. Cl.: A61C 17/34, A61C 17/40

(54) **ELEKTRISCHE ZAHNBÜRSTE MIT DREHBAREM BORSTENTRÄGER**
ELECTRIC TOOTHBRUSH WITH ROTARY BRISTLE-BEARER
BROSSE A DENTS ELECTRIQUE A PORTE-SOIES ROTATIF

(30) Priorität: 21.11.1992 DE 4239251
(43) Veröffentlichungstag der Anmeldung: 17.11.1994
(73) Patentinhaber: Braun Aktiengesellschaft, Frankfurt am Main (DE)
(72) Erfinder: DRÖSSLER, Michael, D-61440 Oberursel (DE)
(86) Internationale Anmeldenummer: EP9303024
(87) Internationale Veröffentlichungsnummer: WO9412121

(56) Entgegenhaltungen:
- DE-A- 3 505 897
- DE-U- 9 304 184
- GB-A- 1 583 558

## Beschreibung

Die Erfindung betrifft eine elektrische Zahnbürste mit einem Bürstenteil, in dem eine um eine Drehachse drehbar gelagerte Welle mit einem exzentrisch zu der Drehachse angeordneten Mitnehmer untergebracht ist und mit einem an dem Bürstenteil um eine Drehachse drehbar gelagerten Borstenträger, wobei die Drehachsen einen Winkel, insbesondere einen rechten Winkel zwischen sich einschließen, und mit einem Mittel zum alternierenden Antrieb des Borstenträgers durch die Welle.

Eine derartige elektrische Zahnbürste ist aus der Offenlegungsschrift DE 39 37 850 A1 bekannt. Dort erfolgt der Antrieb des Borstenträgers mit Hilfe eines Kegelradgetriebes. Diese Ausführung hat sich in der Praxis vielfach bewährt, erfordert jedoch einen alternierenden Antrieb der Welle der elektrischen Zahnbürste. Außerdem ist das Kegelradgetriebe aus Sintermetall hergestellt wodurch ein hoher Material- und Kostenaufwand bedingt ist.

Aus der Offenlegungsschrift DE 17 66 651 A1 ist eine Vorrichtung zum Reinigen und Polieren von Zähnen bekannt, bei der ein exzentrisch von einer Welle abstehender Bolzen in eine Außenringnut eines verschiebbaren Zylinders eingreift, der des weiteren eine konische Mittelbohrung aufweist, in die ein Werkzeug zum Reinigen der Zähne eingesteckt werden kann. Durch eine Rotation der Welle wird über den exzentrischen Bolzen der Zylinder und damit auch das Reinigungswerkzeug in eine Auf- und Abbewegung versetzt. Das Reinigungswerkzeug ist gleichzeitig aufgrund der Außenringnut um seine Längsachse drehbar, so daß sich das Werkzeug beispielsweise beim Einführen in einen Zahnzwischenraum hinsichtlich seiner Winkelstellung selbst justiert. Ein alternierender Antrieb des Reinigungswerkzeugs um seine Längsachse erfolgt jedoch nicht.

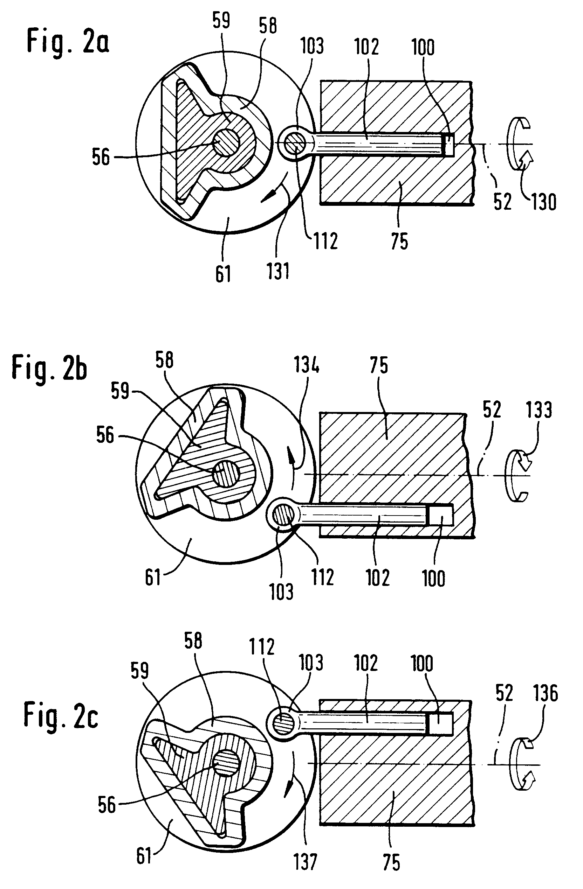

Aus der Offenlegungsschrift DE 32 33 266 A1 ist eine Vorrichtung zur prophylaktischen Behandlung von Zahnkaries durch mechanische Massagebehandlung des Zahnschmelzes bekannt, bei der von einer aneiner Welle befestigten Scheibe ein exzentrisch angeordneter Zapfen absteht. Das Schaftende eines Massagenapfes ist in eine Hülse eingesteckt, die mit einer Längsnut versehen ist. Diese Längsnut ist dem exzentrischen Zapfen in der Weise zugeordnet, daß, sofern der Zapfen in die Längsnut eintaucht, bei einer Drehbewegung der Welle der Zapfen die Längsnut mitnimmt und damit auch die Hülse in eine Drehbewegung versetzt wird. Taucht jedoch der Zapfen nicht in die Längsnut ein, wie es beispielsweise in der Figur 2a der Offenlegungsschrift dargestellt ist, so hat dies zur Folge, daß die Welle nicht mit der Hülse gekoppelt ist. Wird in diesem Fall die Welle in eine Drehbewegung versetzt, so kann dies zur Folge haben, daß der Zapfen aufgrund der fehlenden Kopplung die Hülse nicht mitnimmt. Diese Gefahr besteht insbesondere dann, wenn die Welle alternierend angetrieben wird, da die Längsnut der Hülse in diesem Fall genau im Umkehrpunkt der alternierenden Drehbewegung nicht mit dem Zapfen gekoppelt ist. Auf jeden Fall ist mit dieser Vorrichtung nur eine solche alternierende Bewegung des Massagekopfes mit einem stark begrenzten Drehwinkel realisierbar. Auch kann die Welle nicht rotierend angetrieben werden, da dann die Funktionsfähigkeit der Vorrichtung nicht gegeben ist. Somit ist die bekannte Vorrichtung in der Wirkung begrenzt und im Aufbau kompliziert.

In der GB-PS 1208149 ist ein Reinigungsgerät beschrieben, das zwei konzentrische Reinigungsringe aufweist, die mit Hilfe von Kegelradgetrieben zueinander gegensinnig angetrieben sind.

Aufgabe der Erfindung ist es, eine elektrische Zahnbürste zu schaffen, die bei einfachem konstruktiven Aufbau und geringem Kostenaufwand einen alternierenden Antrieb des Borstenträgers um einen großen Drehwinkel zuläßt. Des weiteren soll der Borstenträger nach einem Nebenaspekt der Erfindung durch eine rotierend oder alternierend angetriebene Welle in alternierende Bewegung versetzbar sein.

Diese Aufgabe wird durch die in Anspruch 1 angegebenen Merkmale gelöst.

Durch diese Maßnahme wird dafür Sorge getragen, daß der Borstenträger in eine alternierende Drehbewegung versetzt wird, unabhängig davon, ob die Welle eine rotierende oder eine alternierende Drehbewegung ausführt. In beiden Fällen gewährleisten der exzentrisch angeordnete Mitnehmer und der exzentrisch angeordnete Aufnehmer eine sichere Übertragung der Drehbewegungen auch über große Drehwinkel. Durch die Kopplung des Mitnehmers und des Aufnehmers wird erreicht, daß die Wirkverbindung zwischen den beiden Bauteilen in jedem Fall erhalten bleibt. Für den alternierenden Antrieb des Borstenträgers sind somit nur der exzentrisch angeordnete Mitnehmer sowie der exzentrisch angeordnete Aufnehmer erforderlich. Weitere Bauteile, insbesondere Getriebebauteile können entfallen. Der Aufbau der elektrischen Zahnbürste wird dadurch insgesamt vereinfacht.

Bei einer vorteilhaften Ausgestaltung der Erfindung ist die Stange in einer etwa parallel zur Drehachse der Welle angeordneten Bohrung aufgenommen. Somit besteht die Möglichkeit, den aus einem einzigen Bauteil bestehenden Mitnehmer, der zweckmäßigerweise aus Metall hergestellt ist, parallel zur Drehachse der Welle anzuordnen.

Des weiteren kann der als Stift ausgebildete Aufnehmer in einer etwa parallel zur Drehachse des Borstenträgers angeordneten Bohrung aufgenommen sein. Auch in diesem Fall ist für den im wesentlichen parallel der Drehachse des Borstenträgers angeordnete Stift nur ein einziges Bauteil erforderlich, wobei der Stift zweckmäßigerweise aus Metall hergestellt ist.

Es ist nun möglich, daß die Stange und der Stift fest miteinander verbunden oder auch einstückig ausgeführt sind. Es ist vorteilhaft, die Aufnahme für die Stange und den Stift so auszuführen, daß sich die Stange wie auch der Stift in den jeweiligen Aufnahmen drehen und in ihren axialen Richtungen bewegen können.

Bei einer anderen vorteilhaften Ausführungsform ist die Stange an ihrem freien Ende mit einer Öse versehen, die von dem Stift durchsetzt ist. Bei dieser Ausführungsform ist die Bohrung der Stange vorteilhaft derart auszuführen, daß sich die Stange drehen und in axiale Richtung bewegen kann. Des weiteren ist die Öse um den Stift drehbar und in dessen axialer Richtung bewegbar.

Bei beiden Ausführungsformen der Kopplung der Stange und des Stifts ist eine sichere Verbindung zwischen diesen Bauteilen gewährleistet. Die Kopplung zwischen der Stange und dem Stift kann im normalen Betrieb nicht getrennt werden.

Insbesondere die Ausführungsform, bei der die Stange mit der Öse versehen ist, bietet darüber hinaus den Vorteil einer einfachen und schnellen Montage.

Die Verwendung der exzentrisch angeordneten Stange sowie des exzentrisch angeordneten Stiftes hat darüber hinaus noch den Vorteil, daß über eine Variation des Grades der Exzentrizität von Stange bzw. Stift der Winkelbereich der alternierenden Drehbewegung des Borstenträgers auf einfache Weise eingestellt werden kann. Es ist also möglich, durch die Wahl des Abstands beispielsweise der Stange von der Drehachse der Welle den Drehwinkelbereich der alternierenden Drehbewegung des Borstenträgers zu vergrößern oder zu verkleinern.

Bei einer weiteren vorteilhaften Ausführungsform ist der Borstenträger schwenkbar im Bürstenteil gelagert. Zu diesem Zweck ist der Borstenträger mit einer Achse versehen, die beispielsweise mittels einer Lagerkugel in einem Kalottenlager aufgenommen ist. Der Borstenträger ist somit einerseits wie bisher um seine eigene Drehachse drehbar, darüber hinaus jedoch auch noch um das Kalottenlager schwenkbar.

Ist in diesem Fall der Mitnehmer als Stange und der Aufnehmer als Stift ausgeführt, und wird in Abwandlung der bisherigen Ausführungsformen die Bohrung der Stange derart ausgeführt, daß sich die Stange zwar drehen, jedoch nicht in ihrer axialen Richtung bewegen kann, so hat dies zur Folge, daß der Borstenträger in eine alternierende Dreh- und Taumelbewegung versetzt wird. Diese vorteilhafte Ausgestaltung bewirkt eine erhöhte Reinigungswirkung der elektrischen Zahnbürste.

Bei einer anderen vorteilhaften Ausführungsform weist der Borstenträger einen äußeren und einen inneren Borstenring auf, die beide um die Drehachse des Borstenträgers drehbar gelagert sind. Dem äußeren und dem inneren Borstenring ist jeweils ein Aufnehmer zugeordnet, wobei jeder Aufnehmer wiederum mit einem Mitnehmer gekoppelt ist. Zweckmäßigerweise sind die Mitnehmer auf einander gegenüberliegenden Seiten der Drehachse der Welle exzentrisch angeordnet. Dies hat zur Folge, daß sich der äußere und der innere Borstenring in entgegengesetzten Drehrichtungen alternierend bewegen, wodurch die Reinigungswirkung der Zahnbürste verbessert wird.

In einer besonderen Ausgestaltung weist der Borstenträger eine exzentrische Bohrung auf, die sich wenigstens zur Unterseite des Borstenträgers öffnet, wobei der Aufnehmer und Mitnehmer als einstückiges Übertragungselement ausgebildet sind. Durch diese Maßnahme wird eine äußerst einfache Montage des Übertragungselementes in der Zahnbürste gewährleistet.

Von Vorteil weist die Bohrung über einen mittleren Teilabschnitt des Borstenträgers eine Durchbrechung zur Seitenwand des Borstenträgers auf. Die Durchbrechung erlaubt einen Austritt der Stange des Übertragungselementes, die dann ohne weiteres in die in der Welle vorgesehene Aufnahme eingeführt werden kann.

Von Vorteil ist das Übertragungselement T-förmig ausgebildet, wobei die Stange bevorzugt einen geringeren Durchmesser aufweist als der Stift. Hierdurch wird die Möglichkeit gegeben, den Stift an beiden Endabschnitten im Borstenträger trotz einfacher Montage des Übertragungselementes am Borstenträger zu lagern. Natürlich kann das Übertragungselement auch L-förmig ausgebildet sein oder andere zweckmäßige Formgestaltungen aufweisen.

Nach einer weiteren Ausführungsform der Erfindung ist in einem unteren Teilabschnitt der Bohrung des Borstenträgers eine insbesondere langschlitzförmige, sich radial zur Seitenwand erstreckende Öffnung vorgesehen, die bevorzugt eine durch Ansätze gebildete Verengung aufweist. Diese Ausführungsform weist den Vorteil einer äußerst einfachen Montage auf, da das insbesondere T-förmig ausgebildete Übertragungselement mit seinem Stift einfach von der Unterseite des Borstenträgers in die Bohrung eingeschoben wird, wobei die Stange des Übertragungselementes während des Montagevorganges von der langschlitzförmigen Öffnung aufgenommen wird. Nach Beendigung der Montage des Übertragungselementes erstreckt sich dessen Stange durch die in dem mittleren Teilabschnitt des Borstenträgers vorgesehene Durchbrechung hin zur Welle des Bürstenteils. Die von den Ansätzen gebildete Verengung der langschlitzförmigen Öffnung dient dazu, auch den zur Unterseite des Borstenträgers weisenden Abschnitt des Stiftes am Borstenträger zu lagern. Da die Stange vorzugsweise einen geringeren Durchmesser als der Stift aufweist, läßt sich die Stange während der Montage am Borstenträger durch die Verengung hindurchführen, während nach Beendigung des Montagevorganges die Ansätze einer Art Widerlager für den Stift bilden. Der andere Abschnitt des Stiftes wird in der Bohrung im Borstenträger gelagert.

Nach einer weiteren, äußerst vorteilhaften Ausgestaltung der Erfindung ist in einem unteren Teilabschnitt der Bohrung des Borstenträgers ein im wesentlichen sehnenartig angeordneter, zu Unterseite offener Einschnitt vorgesehen, der sich von der Bohrung weg zu einem Seitenwandabschnitt erstreckt, und der mit einem weiteren, in der Seitenwand vorgesehenen, Einschnitt in Verbindung steht. Hier erfolgt die Montage des Übertragungselementes ebenfalls in der Weise, daß dieses mit dem Stift von unten in die Bohrung eingeführt wird, wobei das Übertragungselement so zu positionieren ist, daß die Stange in dem zur Unterseite offenen Einschnitt Aufnahme findet. Das Übertragungselement wird axial bezüglich des Borstenträgers zu dessen Oberseite verschoben, bis die Stange in dem in der Seitenwand vorgesehenen Einschnitt zum Liegen kommt. Dann kann die Stange um den Stift aus dieser Position radial nach außen in die endgültige Montagestellung geschwenkt werden. Diese weitere Ausgestaltung hat den großen Vorteil, daß der Stift an beiden Endabschnitten am Borstenträger festgelegt und darüber hinaus gegen ein Herausrutschen aus der Bohrung gesichert ist. Auch diese Art der Montage des Übertragungselementes an dem Borstentrager ist äußerst einfach und kann maschinell erfolgen.

Insbesondere ist es für alle Ausführungsformen nicht zwingend erforderlich, daß die Drehachse des Borstenträgers in etwa rechtwinklig zur Drehachse der Welle und/oder der als Stift ausgebildete Aufnehmer in etwa parallel zur Drehachse des Borstenträgers angeordnet sind. Durch abweichende winklige Anordnungen dieser Komponenten ist der alternierende Antrieb des Borstenträgers hinsichtlich Rotationswinkel, Kreisbeschleunigung und weiteren Parametern positiv beeinflußbar.

Weitere Merkmale, Vorteile und Anwendungsmöglichkeiten der Erfindung ergeben sich aus der nachfolgenden Beschreibung der Ausführungsbeispiele, die in der Zeichnung näher dargestellt sind.

Es zeigen:
- Fig. 1: eine schematische Schnittdarstellung eines ersten Ausführungsbeispiels des Bürstenteils einer elektrischen Zahnbürste nach der Erfindung, mit alternierend angetriebener Welle,
- Fig. 2a bis 2c: schematische Schnittdarstellungen durch den Bürstenteil der Fig. 1 entlang der Ebene II - II,
- Fig. 3: eine schematische Schnittdarstellung eines zweiten Ausführungsbeispiels des Bürstenteils einer elektrischen Zahnbürste nach der Erfindung, mit rotierend angetriebener Welle,
- Fig. 4: eine schematische Schnittdarstellung durch das Bürstenteil der Fig. 3 entlang der Ebene IV - IV,
- Fig. 5: eine schematische Perspektivdarstellung eines dritten Ausführungsbeispiels des Bürstenteils einer elektrischen Zahnbürste nach der Erfindung,
- Fig. 6: eine schematische Schnittdarstellung eines vierten Ausführungsbeispiels des Bürstenteils einer elektrischen Zahnbürste nach der Erfindung.
- Fig. 7a bis 7e: eine schematische Darstellung in Seitenansicht und mehreren Schnitten eines fünften Ausführungsbeispiels der Festlegung des Übertragungselementes an dem Borstenträger,
- Fig. 8a bis 8e: eine schematische Darstellung in Seitenansicht und mehreren Schnitten eines sechsten Ausführungsbeispiels der Festlegung des Übertragungselementes an dem Borstenträger und
- Fig. 9: eine schematische Schnittdarstellung eines siebten Ausführungsbeispiels des Bürstenteils einer elektrischen Zahnbürste nach der Erfindung, wobei der Borstenträger neben der oszillierenden Bewegung um die Drehachse eine zusätzliche Hubbewegung in Richtung der Drehachse ausführt.

Die nachfolgende Beschreibung basiert auf der eingangs bereits genannten Offenlegungsschrift DE 39 37 850 A1 der Anmelderin.

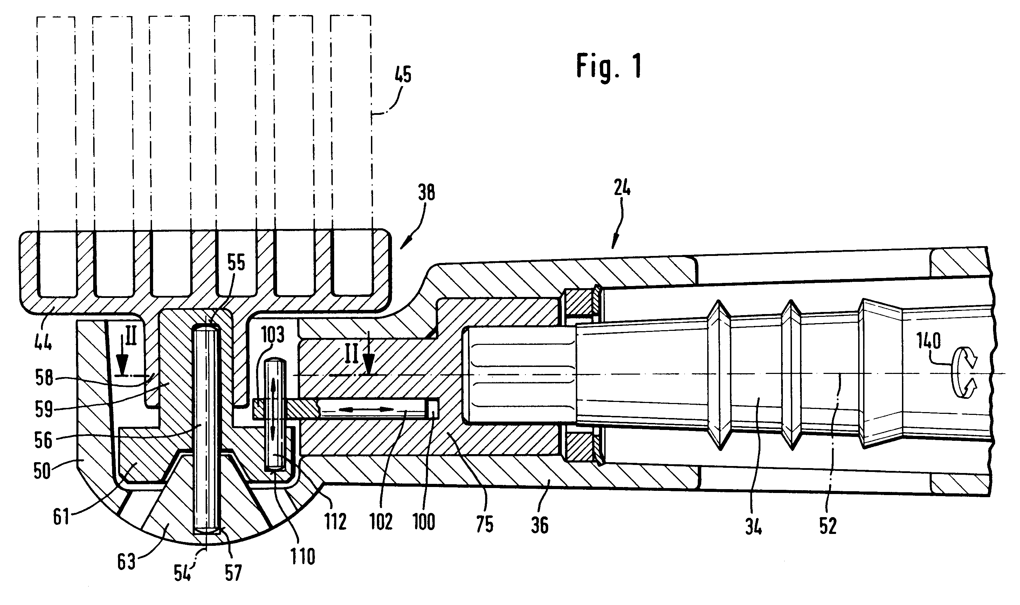

Die Figur 1 zeigt als erstes Ausführungsbeispiel ein Bürstenteil 24, das in nicht näher dargestellter Weise mit einem Griffteil einer elektrischen Zahnbürste verbunden werden kann. Das Bürstenteil 24 besteht aus einem hohlen Trägerrohr 36, in dem eine Welle 34 mit einem aufgesteckten Wellenstück 75 untergebracht ist. Die Welle 34 ist in nicht näher dargestellter Weise mit einem in dem Griffteil der Zahnbürste untergebrachten Elektromotor gekoppelt, der die Welle 34 in eine alternierende Drehbewegung versetzt. Dies ist in der Figur 1 durch den Pfeil 140 kenntlich gemacht.

An seinem dem Griffteil der Zahnbürste abgewandten Ende geht das Trägerrohr 36 in eine nach oben offene, topfförmige Aufnahme 50 über. In dieser Aufnahme 50 ist ein Borstenträger 38 untergebracht, wobei eine Trägerplatte 44 mit darin gehaltenen Borsten 45 die Öffnung der Aufnahme 50 abdeckt. Auf der der Trägerplatte 44 gegenüberliegenden Seite der Aufnahme 50 ist eine Erhebung 63 vorgesehen, in die eine Sacklochbohrung 57 eingebracht ist. In der Sacklochbohrung 57 ist eine Achse 56 aufgenommen, die der drehbaren Lagerung des Borstenträgers 38 dient.

Auf die Achse 56 ist mittels einer Sacklochbohrung 55 ein Zapfen 59 aufgesteckt, der auf seiner der Erhebung 63 zugewandten Seite zu einer Ringschulter 61 erweitert ist. Auf den Zapfen 59 ist ein Hülsenabschnitt 58 formschlüssig aufgesteckt, wobei dieser Hülsenabschnitt 58 mit der Trägerplatte 44 verbunden ist.

Der gesamte Borstenträger 38, also die Trägerplatte 44 mit den Borsten 45 sowie der Zapfen 59 mit der Ringschulter 61 sind um die von der Achse 56 gebildete Drehachse 54 drehbar gelagert. Ebenso ist die Welle 34 zusammen mit dem Wellenstück 75 um die von der Welle 34 gebildete Drehachse 52 drehbar gelagert, wobei diese Drehachse gleichzeitig die Längsmittelachse des Trägerrohrs 36 und damit des Bürstenteils 24 darstellt. Die Drehachse 54 des Borstenträgers 38 und die Drehachse 52 der Welle 34 sind winklig zueinander angeordnet, wobei der Winkel etwa 90° aufweist.

Etwa parallel zur Drehachse 52 der Welle 34, jedoch mit Abstand zu dieser Drehachse 52 ist in dem Wellenstück 75 auf der der Aufnahme 50 zugewandten Seite eine Bohrung 100 exzentrisch eingebracht. In der Bohrung 100 ist eine Stange 102 aufgenommen, die an ihrem aus dem Wellenstück 75 herausragenden freien Ende eine Öse 103 aufweist. Der Durchmesser der Bohrung 100 ist geringfügig größer gewählt als der Durchmesser der Stange 102. Auf diese Weise wird erreicht, daß sich die Stange 102 in der Bohrung 100 um ihre eigene Achse drehen und in axialer Richtung hin- und herbewegen kann.

In dem dem Wellenstück 75 zugewandten Bereich der Ringschulter 61 ist eine Bohrung 110 eingebracht, die parallel zur Drehachse 54 des Borstenträgers 38, jedoch mit Abstand zu dieser Drehachse 54 exzentrisch angeordnet ist. In der Bohrung 110 ist ein Stift 112 fest eingesteckt, dessen über die Ringschulter 61 herausragendes freies Ende sich durch die Öse 103 der Stange 102 erstreckt. Der Durchmesser der Öse 103 ist geringfügig größer als der Durchmesser des Stifts 112, so daß sich die Öse 103 um den Stift 112 drehen sowie in axialer Richtung des Stifts 112 hin- und herbewegen kann.

Die Stange 102 und damit die Welle 34 des Bürstenteils 24 sind somit über die Öse 103 mit dem Stift 112 und damit mit dem Borstenträger 38 gekoppelt.

Anhand der Figuren 2a bis 2c wird nachfolgend die Wirkungsweise der Kopplung im eingeschalteten Betriebszustand der elektrischen Zahnbürste erläutert. Figur 2a zeigt dabei die Mittelstellung dieser Kopplung, während die Figuren 2b und 2c die beiden Extremstellungen darstellen.

Wird die Welle 34 und damit das Wellenstück 75 In der mit dem Pfeil 130 angegebenen Richtung um die Drehachse 52 in Bewegung versetzt, so hat dies zur Folge, daß die Stange 102 in der Figur 2a nach unten bewegt wird. Über die Öse 103 und den Stift 112 wird dadurch die Ringschulter 61 und damit der Borstenträger 38 um die Achse 56 in die mit dem Pfeil 131 angegebene Richtung gedreht. Bei dieser Drehbewegung bewegt sich die Stange 102 um ein Stück aus der Bohrung 100 heraus, um damit den sich vergrößernden Abstand des Stifts 112 von dem Wellenstück 75 auszugleichen. Gleichzeitig dreht sich die Öse 103 um den Stift 112, um dadurch ebenfalls die Drehung der Ringschulter 61 um die Achse 56 auszugleichen. Die gesamte, mit den Pfeilen 130 und 131 angegebene Drehbewegung setzt sich fort, bis die in der Figur 2b dargestellte Extremstellung erreicht ist.

Bei der in der Figur 2b gezeigten Extremstellung dreht sich die Drehrichtung des Wellenstücks 75 um, und zwar in die Richtung des Pfeiles 133. Diese Drehbewegung des Wellenstücks 75 wird über die Stange 102, die Öse 103 und den Stift 112 wieder auf die Ringschulter 61 und damit auf den Borstenträger 38 übertragen, und zwar in eine Drehung in Richtung des Pfeiles 134. Bei dieser Drehbewegung verkürzt sich zuerst der Abstand des Stiftes 112 von dem Wellenstück 75, so daß die Stange 102 zuerst weiter in die Bohrung 100 eintaucht. Sobald jedoch die in der Figur 2a gezeigte Mittelstellung überschritten ist, bewegt sich die Stange 102 aufgrund eines sich vergrößernden Abstands wieder aus der Bohrung 100 heraus. Des weiteren dreht sich die Öse 103 während der gesamten Drehbewegung um den Stift 112.

Ist die in der Figur 2c dargestellte andere Extremstellung erreicht, so drehen sich die Bewegungsrichtungen wieder um, was in der Figur 2c mit den Pfeilen 136 und 137 zum Ausdruck gebracht ist. Die Stange 102 bewegt sich wieder in der Bohrung 100 und die Öse 103 dreht sich wieder um den Stift 112. Es wird dann die in der Figur 2a dargestellte Mittelstellung erreicht, so daß ein vollständiger Zyklus abgeschlossen ist.

Insgesamt wird somit die alternierende Drehbewegung der Welle 34 über die Stange 102, die Öse 103 und den Stift 112 in eine alternierende Drehbewegung des Borstenträgers 38 übertragen.

Der vom Borstenträger 38 überstrichene Drehwinkelbereich kann durch die Wahl des Abstands der Bohrung 100 von der Drehachse 52 der Welle 34 sowie durch die Wahl des Abstands der Bohrung 110 von der Drehachse 54 des Borstenträgers 38 eingestellt werden. Der bevorzugte Drehwinkelbereich des Borstenträgers 38 kann in einem Wertbereich von etwa +/-35° liegen.

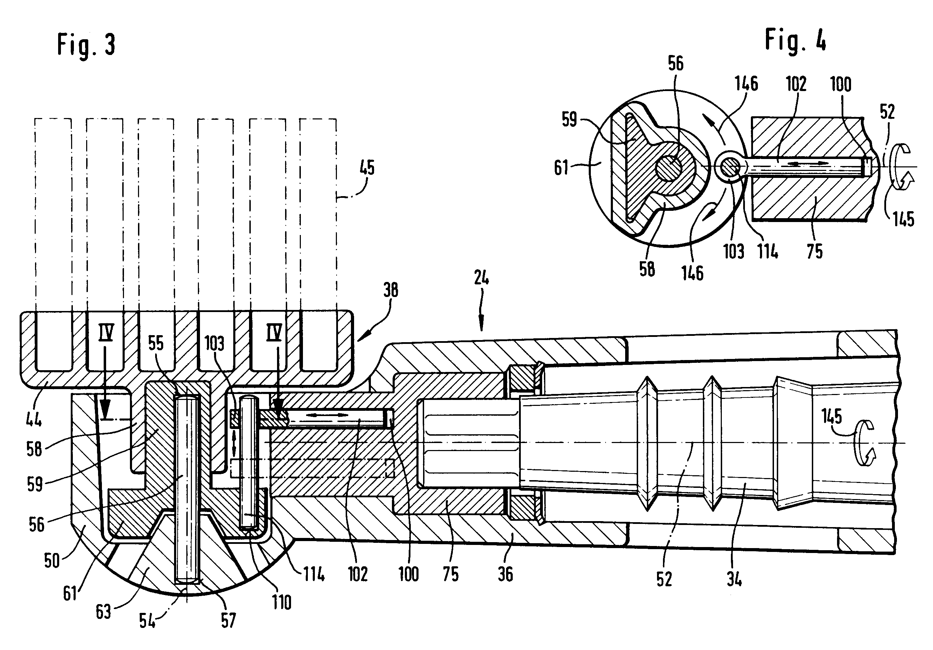

Das in der Figur 3 gezeigte zweite Ausführungsbeispiel eines Bürstenteils 24 entspricht weitestgehend des anhand der Figur 1 beschriebenen ersten Ausführungsbeispiels. Es wird deshalb nachfolgend im wesentlichen nur auf diejenigen Merkmale näher eingegangen, die unterschiedlich sind.

Bei dem Bürstenteil der Figur 3 ist die Welle 34 rotierend angetrieben. Dies ist in der Figur 3 durch den Pfeil 145 kenntlich gemacht. An dem Bürstenteil 24 der Figur 3 ist ein Stift 114 vorgesehen, der in der Bohrung 110 der Ringschulter 61 fest eingesteckt ist. Der Stift 114 ist wie der Stift 112 der Figur 1 etwa parallel zur Drehachse 54 des Borstenträgers 38, jedoch mit Abstand zu dieser Drehachse 54 angeordnet. Im Unterschied zum Stift 112 der Figur 1 ist der Stift 114 der Figur 3 jedoch länger bemessen.

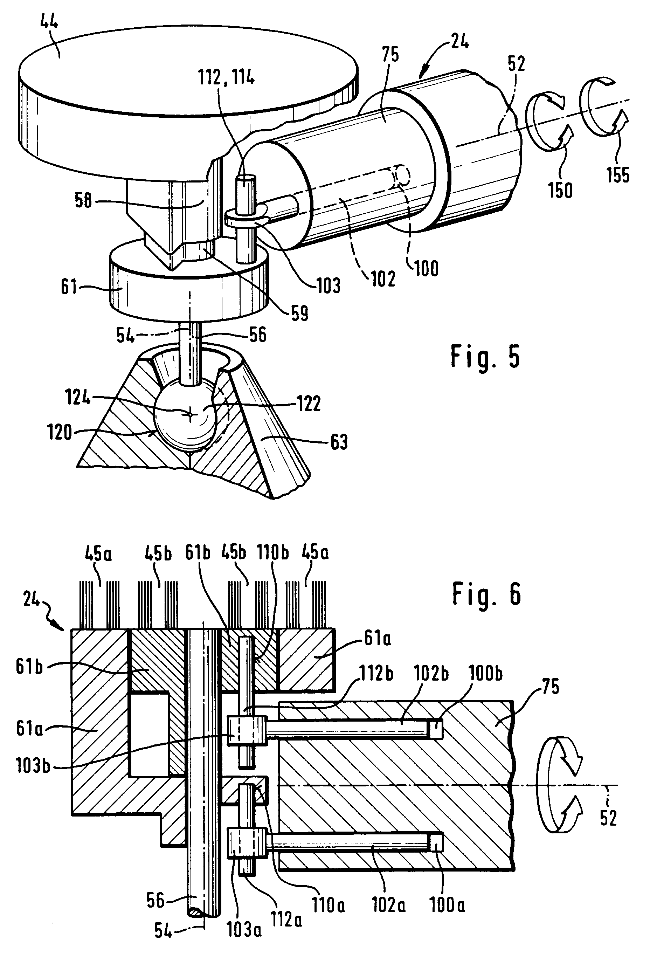

Anhand der Figur 4 wird nachfolgend die Wirkungsweise der über die Stange 102, die Öse 103 und den Stift 114 ausgeführte Kopplung der Welle 34 und des Borstenträgers 38 näher erläutert.

Wird die Welle 34 und damit das Wellenstück 75 in eine Rotation um die Drehachse 52 versetzt, wie dies in der Figur 4 mit dem Pfeil 145 angedeutet ist, so hat dies zur Folge, daß die Stange 102 andauernd hinsichtlich der Drehachse 52 nach oben und nach unten bewegt wird. Aufgrund der Kopplung der Stange 102 über die Öse 103 mit dem Stift 114 hat dies eine Drehbewegung der Ringschulter 61 und damit des Borstenträgers 38 um die Achse 56 zur Folge. Aufgrund der Auf- und Abbewegung der Stange 102 handelt es sich bei der Drehbewegung der Ringschulter 61 um eine alternierende Drehbewegung, wie dies in der Figur 4 durch die Pfeile 146 zum Ausdruck gebracht wird.

Während der Rotation der Welle 34 bewegt sich die Stange 102 in axialer Richtung in der Bohrung 100 hin und her. Des weiteren dreht sich die Öse 103 um den Stift 114 hin und her und bewegt sich in axialer Richtung des Stifts 114 nach oben und nach unten. Insgesamt wird also die rotierende Drehbewegung der Welle 34 über die Stange 102, die Öse 103 und den Stift 114 in eine alternierende Drehbewegung des Borstenträgers 38 übertragen.

Wie bereits erwähnt, kann auch in diesem Fall mit Hilfe der Wahl der Abstände der Stange 102 oder des Stifts 114 von den Drehachsen 52 und 54 der Welle 34 und des Borstenträgers 38 der überstrichene Drehwinkelbereich des Borstenträgers 38 eingestellt werden. Bevorzugt ist dabei wieder ein Drehwinkelbereich mit einem Wert von etwa +/-35°.

Das in der Figur 5 dargestelle dritte Ausführungsbeispiel eines Bürstenteils 24 stimmt in Teilen mit dem ersten bzw. zweiten Ausführungsbeispiel der Figuren 1 bis 4 überein. Es wird deshalb nachfolgend nur auf die unterschiedlichen Merkmale näher eingegangen.

Die Welle 34 und das Wellenstück 75 des in der Figur 5 gezeigten Bürstenteils 24 kann alternierend, wie auch rotierend angetrieben werden. Dies ist in der Figur 5 durch die Pfeile 150 und 155 zum Ausdruck gebracht. Bei einem alternierenden Antrieb ist der kürzere Stift 112, wohingegen bei einem rotierenden Antrieb der längere Stift 114 vorgesehen.

Der wesentliche Unterschied des Bürstenteils 24 nach der Figur 5 besteht darin, daß die Achse 56 nicht wie bei den Ausführungsbeispielen der Figuren 1 bis 4 in der Sacklochbohrung 57 aufgenommen ist, sondern daß bei dem dritten Ausführungsbeispiel der Figur 5 die Achse 56 mit einer Lagerkugel 122 versehen ist, die in einem Kalottenlager 120 gelagert ist. Das Kalottenlager 120 ist dabei in der Erhebung 63 des Bürstenteils 24 untergebracht, so daß die Achse 56 um einen Punkt 124 schwenkbar gelagert ist.

Ein weiterer Unterschied besteht darin, daß die Stange 102 innerhalb der Bohrung 100 in ihrer axialen Richtung fixiert ist. Dies bedeutet, daß sich die Stange 102 um ihre eigene Achse in der Bohrung 100 drehen kann, jedoch in ihrer axialen Richtung unbeweglich ist.

Wird die Welle 34 in eine alternierende oder rotierende Drehbewegung versetzt, so hat dies, wie bereits anhand der Figuren 1 bis 4 erläutert worden ist, eine alternierende Drehbewegung der Ringschulter 61 und damit des Borstenträgers 38 zur Folge. Durch die Fixierung der Stange 102 in der Bohrung 100 kann jedoch der sich andauernd ändernde Abstand des Stifts 112 oder des Stifts 114 von dem Wellenstück 75 nicht ausgeglichen werden. Dies hat zur Folge, daß die Ringschulter 61 und damit der gesamte Borstenträger 38 diesen sich ändernden Abstand ausgleichen muß. Dies wird mit Hilfe der schwenkbaren Lagerung der Achse 56 dadurch ermöglicht, daß der Borstenträger 38 um den Punkt 124 hin- und herschwenkt. Der Borstenträger 38 führt damit insgesamt eine alternierende Dreh- und Taumelbewegung aus.

In der Figur 6 ist als viertes Ausführungsbeispiel ein Bürstenteil 24 gezeigt, das einen äußeren und einen inneren Borstenring aufweist. Der Einfachheit halber sind diese beiden Borstenringe in der Figur 6 als äußere Ringschulter 61a und innere Ringschulter 61b dargestellt, die konzentrisch zur Drehachse 54 angeordnet sind. Die äußere Ringschulter 61a trägt die Borsten 45a und die innere Ringschulter 61b trägt die Borsten 45b. Es versteht sich, daß bei dem Ausführungsbeispiel der Figur 6 die Borsten 45a und 45b auch in Trägerplatten oder Trägerringen gehalten sein können, wobei diese Trägerplatten oder Trägerringe dann in einer Art und Weise mit den Ringschultern 61a und 61b verbunden sein können, wie dies bei den Ausführungsbeispielen der Figuren 1 bis 5 der Fall ist.

Das Wellenstück 75 ist mit zwei Bohrungen 100a und 100b versehen, die jeweils parallel, aber mit Abstand und damit exzentrisch zur Drehachse 52 angeordnet sind und in denen jeweils eine Stange 102a und 102b aufgenommen ist. Die Stangen 102a und 102b sind in den Bohrungen 100a und 100b drehbar und in ihrer axialen Richtung beweglich angeordnet. An den freien Enden der Stangen 102a und 102b ist jeweils eine Öse 103a und 103b angebracht.

In der äußeren Ringschulter 61a ist eine Bohrung 110a eingebracht, in die ein Stift 112a fest eingesteckt ist. Der Stift 112a ist parallel und exzentrisch zur Drehachse 54 der Achse 56 des Borstenträgers 38 angeordnet. Des weiteren durchsetzt der Stift 112a die Öse 103a, wobei sich die Öse 103a um den Stift drehen und sich in dessen axialer Richtung hin- und herbewegen kann.

In entsprechender Weise ist in der Ringschulter 61b eine Bohrung 110b eingebracht, in die ein Stift 112b eingesteckt ist, der des weiteren die Öse 103b durchsetzt.

Wie aus der Figur 6 zu entnehmen ist, sind die Bohrungen 100a und 100b hinsichtlich der Drehachse 52 der Welle 34 auf einander gegenüberliegenden Seiten exzentrisch angeordnet. Durch die Kopplung der Stangen 102a und 102b über die Ösen 103a und 103b mit den Stiften 112a und 112b wird erreicht, daß die äußere Ringschulter 61a und die innere Ringschulter 61b gegenläufig alternierende Drehbewegungen ausführen. Insgesamt führt bei dem Ausführungsbeispiel der Figur 6 eine alternierende Drehbewegung der Welle 34 zu einer alternierenden und gegenläufigen Drehbewegung beider Borstenringe übertragen.

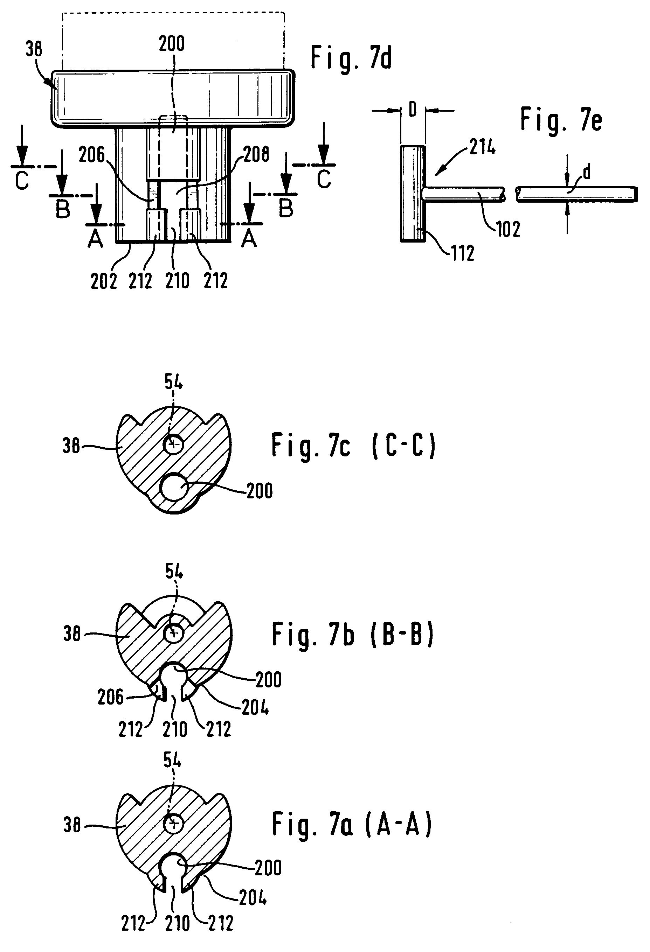

Figur 7 zeigt ein fünftes Ausführungsbeispiel einer Festlegung des aus der Stange 102 und dem Stift 112 bestehenden Übertragungselements 214. In dem Borstenträger 38 ist exzentrisch eine Bohrung 200 angeordnet, die sich zur Unterseite 202 des Borstenträgers 38 öffnet und zur Aufnahme des Stiftes 112 dient, der einstückig mit der Stange 102 verbunden ist. Das Übertragungselement 214 ist T-förmig ausgebildet, wobei der Querbalken durch den Stift 112 und der Längsbalken durch die Stange 102 gebildet wird. Von Vorteil hat die Stange 102 einen geringeren Durchmesser als der Stift 112. Die Bohrung 200 weist über einen mittleren Teilabschnitt des Borstenträgers 38 eine Durchbrechung 206 hin zur Seitenwand 204 des Borstenträgers auf, in der nach erfolgter Montage des Übertragungselementes 214 am Borstenträger 38 die Stange 102 axial verschiebbar und seitlich verschwenkbar aufgenommen ist. Zur Montage dieses Übertragungselementes 214 ist in einem unteren Teilabschnitt der Bohrung 200 des Borstenträgers 38 eine langschlitzförmige, sich radial zur Seitenwand 204 erstreckende Öffnung 208 vorgesehen, die bevorzugt eine durch Ansätze 212 gebildete Verengung 210 aufweist. Das Übertragungselement 214 wird zur Montage am Borstenträger 38 mit dem Stift 112 in die Bohrung 200 eingeführt und axial nach oben gedrückt, wobei die Stange 102 während der Montage von der langschlitzförmigen Öffnung 208 aufgenommen wird. Die Verengung 210 ist derart ausgebildet, daß die Stange 102 mit ihrem geringeren Durchmesser diese ohne weiteres passieren kann, jedoch der untere Abschnitt des Stiftes 112 durch die Ansätze 212 in der Bohrung 200 festgelegt ist.

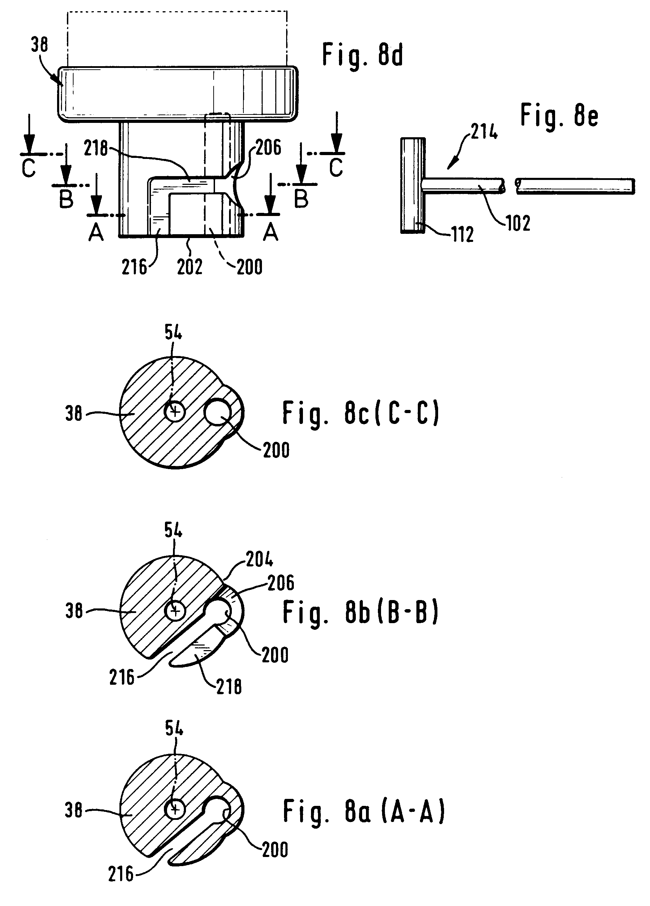

Nach Figur 8 ist in einem unteren Teilabschnitt der Bohrung 200 des Borstenträgers 38 ein im wesentlichen sehnenartig angeordneter, zur Unterseite 202 offener Einschnitt 216 vorgesehen, der mit einem weiteren, in der Seitenwand 204 vorgesehenen Einschnitt 218 in Verbindung steht. In diesem Fall wird das Übertragungselement mit dem Stift 112 wiederum die Bohrung 200 eingeführt, wobei die Stange von der Durchbrechung 206 schräg nach hinten weg geschwenkt ist, so daß sie von dem Einschnitt 216 aufgenommen werden kann. Das Übertragungselement 214 wird axial nach oben in Richtung der Achse der Bohrung 200 verschoben, bis die Stange 10 in den Einschnitt 218 gelangt. Das Übertragungselement 214 kann nun um den Stift 112 herum radial nach außen geschwenkt werden, so daß die Stange 102 von der Durchbrechung 206 aufgenommen wird. Beide einseitigen Abschnitte des Stiftes 112 sind in der Bohrung 200 festgelegt, wobei das Übertragungselement 214 zusätzlich gegen ein Herausrutschen aus der Bohrung 200 gesichert ist.

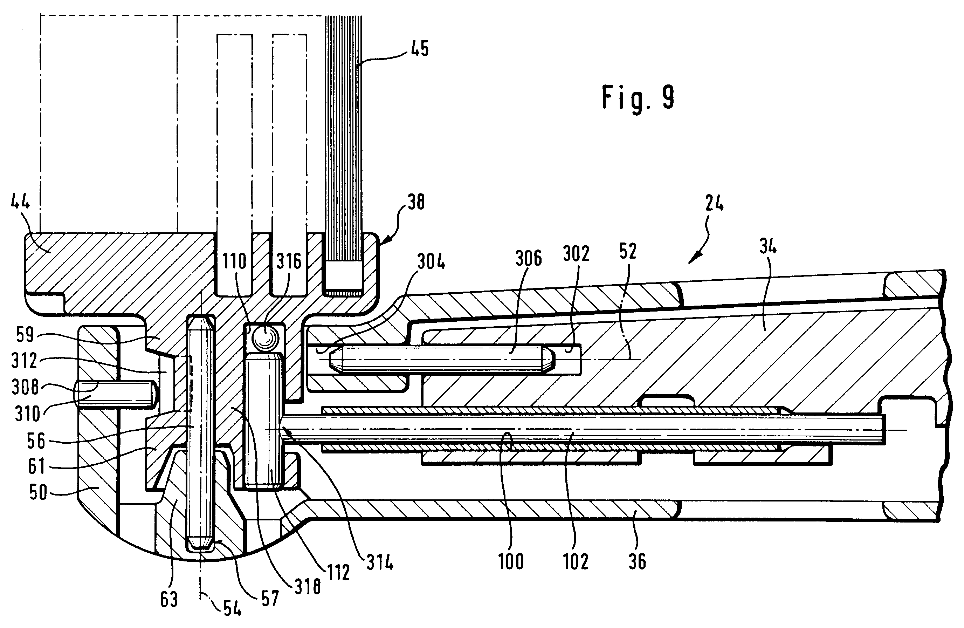

Die beiden Ausführungsbeispiele der Figuren 7 und 8 lassen sich mit den Ausführungsformen der Figuren 1 bis 6 beliebig kombinieren. In Figur 9 ist ein weiteres Ausführungsbeispiel der Erfindung dargestellt, wobei zu den vorhergehenden Ausführungsbeispielen gleich Bauteile mit entsprechenden Bezugsziffern gekennzeichnet sind. Im weiteren werden lediglich die Unterschiede des konstruktiven Aufbaus und deren Funktion geschildert. Der Mitnehmer und Aufnehmer sind einstückig ausgebildet und weisen die Form eines T-Stückes 314 auf. Die Stange 102 ist in einer im wesentlichen parallel zu der Drehachse 52 der Welle 34 angeordneten Aufnahme, insbesondere eine Bohrung 100, aufgenommen. Der Mitnehmer ist bezüglich der Drehachse 52 der Welle 34 axial verschiebbar gelagert. Desweiteren weist die Welle 34 eine zur Drehachse 52 zentrisch angeordnete Bohrung 302 auf, die einen Stift 306 einends aufnimmt. Der Stift 306 greift mit dem anderen Ende in eine Bohrung 304 in der Seitenwand der topfförmigen Aufnahme 50 ein. Durch diese Maßnahme wird eine sichere und spielfreie Lagerung der Welle 34 in dem Trägerrohr 36 gewährleistet. In der Seitenwand der topfförmigen Aufnahme 50 ist eine weitere Bohrung 308 angebracht, in der ein Stift 310 angeordnet ist. Der Stift 310 ragt in den Innenraum der topfförmigen Aufnahme 50 hinein und greift in eine Ausnehmung 312 des Zapfens 318 des Borstenträgers 38. Durch diese Maßnahme ist der Borstenträger 38 gegen eine axiale Verschiebung auf der Achse 56 bzw. gegen ein unbeabsichtigtes Abrutschen von dieser Achse 56 gesichert. Im Unterschied zu den vorhergehenden Ausführungsbeispielen ist der insbesondere als Stift 112 ausgebildete Aufnehmer in der insbesondere als Bohrung 110 ausgebildeten Aufnahme mit dem Borstenträger 38 fest bezüglich einer axialen Verschiebung in Richtung der Drehachse 54 gekoppelt. Insbesondere besteht die Möglichkeit, daß eine axiale Verschiebung des Aufnehmers in der Aufnahme des Borstenträgers 38 durch ein Begrenzungselement 316 oder dergleichen Feststellelement begrenzt bzw. gänzlich vermieden wird. Durch diese Maßnahme wird der Borstenträger 38 nicht nur in eine alternierend oszillierende Drehbewegung um die Drehachse 54 versetzt, sondern führt zusätzlich eine hin- und hergehende Hubbewegung in Richtung der Drehachse 54 aus. Aufgrund dieser Fixierung des Aufnehmers an dem Borstenträger 38 in axialer Richtung (bezogen auf die Drehachse 54) wird der Borstenträger 38 in Richtung der Drehachse 54 von der in Figur 9 dargestellten Position um einen bestimmten Wert angehoben, wenn die Welle 34 von der dargestellten Mittelstellung in eine der beiden Extremstellungen nach links bzw. rechts, bezogen auf die Drehachse 52, gedreht wird. Somit ist der Hub des Borstenträgers 38 abhängig von Exzentrizität der Stange 102 bzw. der Höhe des Kreisbogens, der von der Stange 102 während einer Hin- und Herbewegung der Welle 34 durchlaufen wird. Durch diese der hin- und hergehenden oszillierenden Drehbewegung des Borstenträgers 38 überlagerten Hubbewegung in Richtung der Drehachse führen die Borstenenden auf den zu reinigenden Zähnen neben einer Wischbewegung auch eine Stoßbewegung aus, wodurch die Effektivität der Zahnreinigung, nicht nur in den Interdentalräumen, erhöht wird.

## Patentansprüche

1. Elektrische Zahnbürste mit einem Bürstenteil (24), in dem eine um eine Drehachse (52) drehbar gelagerte Welle (34) mit einem exzentrisch zu der Drehachse (52) angeordneten Mitnehmer untergebracht ist und mit einem an dem Bürstenteil (24) um eine Drehachse (54) drehbar gelagerten Borstenträger (38) wobei die Drehachsen (52, 54) einen Winkel, insbesondere einen rechten Winkel zwischen sich einschließen, und mit einem Mittel zum alternierenden Antrieb des Borstenträgers (38) durch die Welle (34), **dadurch gekennzeichnet,** daß der Borstenträger (38) mit einem exzentrisch zu der Drehachse (54) angeordneten Aufnehmer in Antriebsverbindung steht, der Mitnehmer und der Aufnehmer miteinander gekoppelt und der Mitnehmer als in einer Aufnahme der Welle (34) angeordnete Stange (102) und der Aufnehmer als in einer Aufnahme des Borstenträgers (38) aufgenommener Stift (112, 114) ausgebildet sind.

2. Elektrische Zahnbürste nach Anspruch 1, **dadurch gekennzeichnet,** daß die Stange (102) in einer etwa parallel zur Drehachse (52) der Welle (34) angeordneten Bohrung (100) aufgenommen ist.

3. Elektrische Zahnbürste nach Anspruch 1 oder 2, **dadurch gekennzeichnet,** daß der Stift (112, 114) in einer etwa parallel zur Drehachse (54) des Borstenträgers (38) angeordneten Bohrung (110) aufgenommen ist.

4. Elektrische Zahnbürste nach Anspruch 2 und Anspruch 3, dadurch gekennzeichnet, daß die Stange (102) an ihrem freien Ende mit einer Öse (103) versehen ist, die von dem Stift (112, 114) durchsetzt ist, wobei die Stange (102) in ihrer Aufnahme, insbesondere der Bohrung (100) drehbar und in axialer Richtung bewegbar ist und die Öse (103) um den Stift (112, 114) drehbar und in dessen axialer Richtung bewegbar ist.

5. Elektrische Zahnbürste nach einem der Ansprüche 1 bis 4, dadurch gekennzeichnet, daß der Borstenträger (38) mit einer um die Drehachse (54) drehbaren Achse (56) versehen ist, wobei die Achse (56) schwenkbar im Bürstenteil (24) gelagert ist.

6. Elektrische Zahnbürste nach Anspruch 5, dadurch gekennzeichnet, daß die Achse (56) mit einer Lagerkugel (122) versehen ist, die in einem Kalottenlager (120) des Bürstenteils (24) aufgenommen ist.

7. Elektrische Zahnbürste nach einem der Ansprüche 2 bis 6, dadurch gekennzeichnet, daß die Stange (102) in ihrer Aufnahme, z. B. der Bohrung (100) drehbar, jedoch in axialer Richtung unverschiebbar angeordnet ist.

8. Elektrische Zahnbürste nach einem der Ansprüche 1 bis 7, dadurch gekennzeichnet, daß die Welle (34) alternierend oder rotierend antreibbar ist.

9. Elektrische Zahnbürste nach einem der Ansprüche 1 bis 4 dadurch gekennzeichnet, daß der Borstenträger (38) einen äußeren Borstenring (61a) und einen inneren Borstenring (61b) aufweist, die um die Drehachse (54) des Borstenträgers (38) drehbar gelagert sind, daß dem äußeren Borstenring (61a) ein erster Aufnehmer (110a, 112a) zugeordnet ist, der mit einem ersten Mitnehmer (100a, 102a, 103a) gekoppelt ist, und daß dem inneren Borstenring (61b) ein zweiter Aufnehmer (110b, 112b) zugeordnet ist, der mit einem zweiten Mitnehmer (100b, 102b, 103b) gekoppelt ist.

10. Elektrische Zahnbürste nach Anspruch 9, dadurch gekennzeichnet, daß der erste und der zweite Mitnehmer (100a, 100b, 102a, 102b, 103a, 103b) auf einander gegenüberliegende Seiten der Drehachse (52) der Welle (34) angeordnet sind.

11. Elektrische Zahnbürste nach einem der Ansprüche 1 bis 3, dadurch gekennzeichnet, daß der Borstenträger (38) eine exzentrische Bohrung (200) aufweist, die sich wenigstens zur Unterseite (202) des Borstenträgers (38) öffnet, und der Aufnehmer und Mitnehmer als einstückiges Übertragungselement (214) ausgebildet sind.

12. Elektrische Zahnbürste nach Anspruch 11, dadurch gekennzeichnet, daß die Bohrung (200) über einen mittleren Teilabschnitt des Borstenträgers (38) eine Durchbrechung (206) zur Seitenwand (204) des Borstenträgers (38) aufweist.

13. Elektrische Zahnbürste nach einem der Ansprüche 11 oder 12, dadurch gekennzeichnet, daß das Übertragungselement (214) T-förmig ausgebildet ist, wobei die Stange (102) bevorzugt einen geringeren Durchmesser d aufweist, als der Stift (112) mit einem Durchmesser D.

14. Elektrische Zahnbürste nach einem der Ansprüche 12 oder 13, dadurch gekennzeichnet, daß in einem unteren Teilabschnitt der Bohrung (200) des Borstenträgers (38) eine insbesondere langschlitzförmige, sich radial zur Seitenwand (204) erstreckende Öffnung (208) vorgesehen ist, die bevorzugt eine durch Ansätze (212) gebildete Verengung (210) aufweist.

15. Elektrische Zahnbürste nach einem der Ansprüche 12 oder 13, dadurch gekennzeichnet, daß in einem unteren Teilabschnitt der Bohrung (200) des Borstenträgers (38) ein sich im wesentlichen sehnenartig erstreckender, zur Unterseite (202) offener Einschnitt (216) vorgesehen ist, der mit einem weiteren, in der Seitenwand (204) vorgesehenen Einschnitt (218) in Verbindung steht.

16. Elektrische Zahnbürste nach einem der Ansprüche 1 - 3, dadurch gekennzeichnet, daß der Mitnehmer und Aufnehmer einstückig, insbesondere in Form eines T-Stückes (314) ausgebildet sind.

17. Elektrische Zahnbürste nach einem der Ansprüche 1 - 3, 16, dadurch gekennzeichnet, daß die Welle (34) eine zur Drehachse (52) zentrische Bohrung (302) zur einendigen Aufnahme eines Stiftes (306) aufweist, der mit dem anderen Ende in eine Bohrung (304) in der Seitenwand der topfförmigen Aufnahme (50) eingreift.

18. Elektrische Zahnbürste nach einem der Ansprüche 1 - 3, 16, dadurch gekennzeichnet, daß in der Seitenwand der topfförmigen Aufnahme (50) eine Bohrung (308) zur Aufnahme eines Stiftes (310) vorgesehen ist, der in eine Ausnehmung (312) des Zapfens (318), der bevorzugt einstückig mit dem Borstenträger (38) verbunden ist, eingreift.

19. Elektrische Zahnbürste nach einem der Ansprüche 1 - 3, 16, dadurch gekennzeichnet, daß der Mitnehmer bezüglich der Drehachse (52) der Welle (34) axial verschiebbar ist.

20. Elektrische Zahnbürste nach einem der Ansprüche 1 - 3, 16, dadurch gekennzeichnet, daß der Aufnehmer in einer Aufnahme des Borstenträgers (38) mit diesem bezüglich einer axialen Verschiebung in Richtung der Drehachse (54) gekoppelt ist.

21. Elektrische Zahnbürste nach Anspruch 1 - 3, 16, dadurch gekennzeichnet, daß eine axiale Verschiebung des Aufnehmers in der Aufnahme des Borstenträgers(38) durch ein Begrenzungselement (316) oder dergleichen Feststellelement begrenzt oder ausgeschlossen wird.

## Claims

1. An electric toothbrush with a brush section (24) in which a shaft (34) journaled for rotary movement about an axis of rotation (52) and having a driving means disposed eccentrically to the axis of rotation (52) is received, and with a bristle supporting structure (38) mounted on the brush section (24) so as to be rotary about an axis of rotation (54), with the axes of rotation (52, 54) forming an angle, in particular a right angle, with one another, and with a means for driving the bristle supporting structure (38) in alternate directions by means of the shaft (34), characterized in that the bristle supporting structure (38) is in driving connection with a driven means disposed eccentrically to the axis of rotation (54), that the driving means and the driven means are coupled to each other, and that the driving means is configured as a rod (102) arranged in a mount in the shaft (34), and the driven means is configured as a pin (112, 114) received in a mount in the bristle supporting structure (38).

2. An electric toothbrush as claimed in claim 1, characterized in that the rod (102) is received in a bore (100) arranged approximately parallel to the axis of rotation (52) of the shaft (34).

3. An electric toothbrush as claimed in claim 1 or claim 2, characterized in that the pin (112, 114) is received in a bore (110) arranged approximately parallel to the axis of rotation (54) of the bristle supporting structure (38).

4. An electric toothbrush as claimed in claim 2 and claim 3, characterized in that the rod (102) has at its free end an eyelet (103) through which the pin (112, 114) is passed, said rod (102) being rotatable as well as axially movable inside its mount, in particular the bore (100), and said eyelet (103) being rotatable about said pin (112, 114) as well as movable in the latter's axial direction.

5. An electric toothbrush as claimed in any one of the claims 1 to 4, characterized in that the bristle supporting structure (38) is provided with an axle (56) rotary about the axis of rotation (54), said axle (56) being pivotally mounted in the brush section (24).

6. An electric toothbrush as claimed in claim 5, characterized in that the axle (56) is provided with a bearing ball (122) received in a ball bearing (120) of the brush section (24).

7. An electric toothbrush as claimed in any one of the claims 2 to 6, characterized in that the rod (102) is rotatably arranged in its mount, for example, in the bore (100), while yet being non-displaceable in its axial direction.

8. An electric toothbrush as claimed in any one of the claims 1 to 7, characterized in that the shaft (34) is adapted to be driven so as to perform an alternating or a rotary motion.

9. An electric toothbrush as claimed in any one of the claims 1 to 4, characterized in that the bristle supporting structure (38) includes an outer bristle ring (61a) and an inner bristle ring (61b) which are both rotary about the axis of rotation (54) of the bristle supporting structure (38), that the outer bristle ring (61a) is operatively associated with a first driven means (110a, 112a) coupled to a first driving means (100a, 102a, 103a), and that the inner bristle ring (61b) is operatively associated with a second driven means (110b, 112b) coupled to a second driving means (100b, 102b, 103b).

10. An electric toothbrush as claimed in claim 9, characterized in that the first and the second driving means (100a, 100b, 102a, 102b, 103a, 103b) are disposed on relatively opposite sides of the axis of rotation (52) of the shaft (34).

11. An electric toothbrush as claimed in any one of the claims 1 to 3, characterized in that the bristle supporting structure (38) includes an eccentric bore (200) opening at least towards the underside (202) of the bristle supporting structure (38), and that the driven means and the driving means are configured as a transmission element (214) integrally made of one piece.

12. An electric toothbrush as claimed in claim 11, characterized in that in a mid-section of the bristle supporting structure (38) the bore (200) has an aperture (206) towards the side wall (204) of the bristle supporting structure (38).

13. An electric toothbrush as claimed in any one of the claims 11 or 12, characterized in that the transmission element (214) is of a T-shaped configuration, the diameter d of the rod (102) being preferably smaller than the diameter D of the pin (112).

14. An electric toothbrush as claimed in any one of the claims 12 or 13, characterized in that a lower portion of the bore (200) of the bristle supporting structure (38) includes an opening (208) which extends radially to the side wall (204) in particular in the manner of a longitudinal slot and includes preferably a narrowing (210) formed by extensions (212).

15. An electric toothbrush as claimed in any one of the claims 12 or 13, characterized in that a lower portion of the bore (200) of the bristle supporting structure (38) provides an essentially chord-like notch (216) open towards the underside (202), said notch being in communication with a further notch (218) provided in the side wall (204).

16. An electric toothbrush as claimed in any one of the claims 1 to 3, characterized in that the driving means and the driven means are integrally formed, in particular in the manner of a T-piece (314).

17. An electric toothbrush as claimed in any one of the claims 1 to 3 and 16, characterized in that the shaft (34) includes a bore (302) concentric with the axis of rotation (52) for receiving an end of a pin (306) which has its other end in engagement with a bore (304) provided in the side wall of the cup-shaped socket (50).

18. An electric toothbrush as claimed in any one of the claims 1 to 3 and 16, characterized in that the side wall of the cup-shaped socket (50) includes a bore (308) for receiving a pin (310) which engages in a recess (312) of the trunnion (318) which is preferably integrally formed with the bristle supporting structure (38).

19. An electric toothbrush as claimed in any one of the claims 1 to 3 and 16, characterized in that the driving means is axially displaceable in respect of the axis of rotation (52) of the shaft (34).

20. An electric toothbrush as claimed in any one of the claims 1 to 3 and 16, characterized in that the driven means, being held in a mount of the bristle supporting structure (38), is coupled thereto in respect of an axial displacement in the direction of the axis of rotation (54).

21. An electric toothbrush as claimed in any one of the claims 1 to 3 and 16, characterized in that an axial displacement of the driven means in the mount of the bristle supporting structure (38) is restricted, or avoided altogether, by a limiting means (316) or similar locating means.

## Revendications

1. Brosse à dents électrique comportant un élément de brosse (34) dans lequel est logé un arbre (34) monté de façon à pouvoir tourner autour d'un axe de rotation (52) et comprenant un moyen d'entraînement agencé de façon excentrée par rapport à l'axe de rotation (52) et comprenant un support de poils (38) monté de façon à pouvoir tourner autour d'un axe de rotation (54) sur l'élément de brosse (24), dans laquelle les axes de rotation (52, 54) forment entre eux un angle, en particulier un angle droit, et comportant un moyen pour la commande alternée du support de poils (38) par l'arbre (34), caractérisée en ce que le support de poils (38) est en liaison d'entraînement avec un moyen entraîné qui est agencé de façon excentrée par rapport à l'axe de rotation (54), en ce que le moyen d'entraînement et le moyen entraîné sont accouplés l'un à l'autre et en ce que le moyen d'entraînement est réalisé sous la forme d'une tige (102) agencée dans un logement de l'arbre (34) et le moyen entraîné est réalisé sous la forme d'une cheville (112, 114) reçue dans une logement du support de poils (38).

2. Brosse à dents électrique suivant la revendication 1, caractérisée en ce que la tige (102) est logée dans un trou (100) agencé approximativement parallèlement à l'axe de rotation (52) de l'arbre (34).

3. Brosse à dents électrique suivant la revendication 1 ou 2, caractérisée en ce que la cheville (112, 114) est logée dans un trou (110) agencé approximativement parallèlement à l'axe de rotation (54) du support de poils (38).

4. Brosse à dents électrique suivant la revendication 2 ou la revendication 3, caractérisée en ce que la tige (102) est munie, à son extrémité libre, d'un passage (103) qui est traversé par la cheville (112, 114), la tige (102) pouvant tourner et être déplacée en direction axiale dans logement, en particulier le trou (100), et le passage (103) pouvant tourner autour de la cheville (112, 114) et être déplacé selon sa direction axiale.

5. Brosse à dents électrique suivant l'une des revendications 1 à 4, caractérisée en ce que le support de poils (38) est pourvu d'un axe (56) pouvant tourner autour de l'axe de rotation (54), l'axe (56) étant monté de façon pivotante dans l'élément de brosse (24).

6. Brosse à dents électrique suivant la revendication 5, caractérisée en ce que l'axe (56) est muni d'une sphère de palier (122) qui est logée dans un palier en calotte (120) de l'élément de brosse (24).

7. Brosse à dents électrique suivant l'une des revendications 2 à 6, caractérisée en ce que la tige (102) est agencée de façon à pouvoir tourner dans son logement, par exemple le trou (100), mais de façon non coulissante en direction axiale.

8. Brosse à dents électrique suivant l'une des revendications 1 à 7 caractérisée en ce que l'arbre (34) peut être commandé de façon alternée ou tournante.

9. Brosse à dents électrique suivant l'une des revendications 1 à 4 caractérisée en ce que le support de poils (38) présente un anneau de poils externe (61a) et un anneau de poils interne (61b) qui sont montés de façon à pouvoir tourner autour de l'axe de rotation (54) du support de poils (38), en ce qu'à l'anneau de poils externe (61a) est adjoint un premier moyen entraîné (110a, 112a) qui est accouplé à un premier moyen d'entraînement (100a, 102a, 103a), et en ce qu'à l'anneau de poils interne (61b) est adjoint un second moyen entraîné (110b, 112b) qui est accouplé à un second moyen d'entraînement (100b, 102b, 103b).

10. Brosse à dents électrique suivant la revendication 9, caractérisée en ce que les premier et second moyens d'entraînement (100a, 100b, 102a, 102b, 103a, 103b) sont agencés sur des côtés opposés l'un à l'autre de l'axe de rotation (52) de l'arbre (34).

11. Brosse à dents électrique suivant l'une des revendications 1 à 3 caractérisée en ce que le support de poils (38) présente un trou excentré (200) qui s'ouvre au moins vers le côté inférieur (202) du support de poils (38) et en ce que le moyen d'entraînement et le moyen entraîné sont réalisés sous la forme d'un élément de transmission (214) en une pièce.

12. Brosse à dents électrique suivant la revendication 11, caractérisée en ce que le trou (200) présente sur un tronçon partiel médian du support de poils (38) une découpure (206) jusqu'à la paroi latérale (204) du support de poils (38).

13. Brosse à dents électrique suivant l'une des revendications 11 et 12, caractérisée en ce que l'élément de transmission (214) est réalisé en une forme de T, la tige (102) présentant de préférence un diamètre d inférieur à celui de la cheville (112) avec un diamètre D.

14. Brosse à dents électrique suivant l'une des revendications 12 et 13, caractérisée en ce que dans un tronçon partiel inférieur du trou (200) du support de poils (38), il est prévu une ouverture (208), en particulier en forme de fente longitudinale, qui s'étend radialement jusqu'à la paroi latérale (204) et qui présente de préférence un étranglement (210) formé par des saillies (212).

15. Brosse à dents électrique suivant l'une des revendications 12 et 13, caractérisée en ce que dans un tronçon partiel inférieur du trou (200) du support de poils (38) il est prévu une entaille (216) qui s'étend sensiblement à la manière d'une corde, qui s'ouvre vers le côté inférieur (202) et qui est en liaison avec une autre entaille (218) prévue dans la paroi latérale (204).

16. Brosse à dents électrique suivant l'une des revendications 1 à 3 caractérisée en ce que le moyen d'entraînement et le moyen entraîné sont réalisés en une pièce, en particulier sous la forme d'un élément en T (314).

17. Brosse à dents électrique suivant des revendications 1 à 3, 16, caractérisée en ce que l'arbre (34) présente un trou (302), centré par rapport à l'axe de rotation (52), pour recevoir à une extrémité d'une cheville (306) qui entre en prise par l'autre extrémité dans un trou (304) dans la paroi latérale du logement en forme de pot (50).

18. Brosse à dents électrique suivant l'une des revendications 1 à 3, 16 caractérisée en ce que dans la paroi latérale du logement en forme de pot (50), il est prévu un trou (308) pour recevoir une cheville (310) qui entre en prise dans un évidemment (312) de la broche (318) qui reliée de préférence sous la forme d'une pièce au support de poils (38).

19. Brosse à dents électrique suivant l'une des revendications 1 à 3, 16, caractérisée en ce que le moyen d'entraînement peut être déplacé axialement par rapport à l'axe de rotation (52) de l'arbre (34).

20. Brosse à dents électrique suivant l'une des revendications 1 à 3, 16, caractérisée en ce que le moyen entraîné est accouplé, dans un logement du support de poils (38), avec ce dernier par rapport à un coulissement axial selon la direction de l'axe de rotation (54).

21. Brosse à dents électrique suivant l'une des revendications 1 à 3, 16, caractérisée en ce qu'un coulissement axial du moyen entraîné dans le logement du support de poils (38) est limité ou exclu par un élément de limitation (316) ou par un élément de blocage semblable.
